# FASCICULE DE BREVET EUROPEEN

(11) **EP 3 350 139 B1**
(45) Date de publication et mention de la délivrance du brevet: **28.10.2020**
(21) Numéro de dépôt: 16785193.0
(22) Date de dépôt: 15.09.2016
(51) Int. Cl.: D03D 15/00, C04B 35/83, C04B 35/80, B64D 29/00

(54) **PIÈCE EN MATÉRIAU COMPOSITE**
TEIL AUS EINEM VERBUNDWERKSTOFF
PART MADE OF A COMPOSITE MATERIAL

(30) Priorité: 18.09.2015 FR 1558797
(43) Date de publication de la demande: 25.07.2018
(73) Titulaire: Safran Aircraft Engines, 75015 Paris (FR)
(72) Inventeur: DAMBRINE, Bruno, Jacques, Gérard, 77550 Moissy-Cramayel Cedex (FR)
(74) Mandataire: Cabinet Beau de Loménie
(86) Numéro de dépôt international: PCT/FR2016/052343
(87) Numéro de publication internationale: WO 2017/046538

(56) Documents cités:
- EP-A2- 1 961 923
- WO-A1-91/01284
- FR-A1- 2 917 099
- FR-A1- 2 939 130
- FR-A1- 2 943 942
- FR-A1- 2 970 898

## Description

### Arrière-plan de l'invention

L'invention concerne des pièces en matériau composite ainsi que des procédés de fabrication de telles pièces.

Un domaine d'application de l'invention est la réalisation de pièces de structure en matériau composite à renfort fibreux et matrice résine. De telles pièces sont utilisées dans de très nombreux domaines, notamment dans le domaine aéronautique. Un exemple particulier est la réalisation de carters de turbomachines. La densification de la structure fibreuse de renfort par la matrice résine est réalisée par tout moyen connu, par exemple par moulage avec transfert de résine (procédé RTM pour "Resin Transfer Moulding").

Un autre domaine d'application de l'invention est la réalisation de pièces en matériau composite thermostructural, c'est-à-dire en un matériau ayant des propriétés mécaniques qui le rendent apte à constituer des éléments de structures et ayant la capacité de conserver ces propriétés à des températures élevées. Des matériaux composites thermostructuraux sont typiquement les matériaux composites carbone/ carbone (C/C) ayant un renfort fibreux en carbone densifié par une matrice en carbone, et les matériaux composites à matrice céramique (CMC) ayant un renfort fibreux réfractaire (carbone ou céramique) densifié par une matrice céramique. Des pièces en matériau composite thermostructural sont utilisées notamment dans les domaines aéronautique et spatial. La densification de la structure fibreuse de renfort par le matériau constitutif de la matrice peut être réalisée par infiltration chimique en phase gazeuse (ou CVI pour "Chemical Vapor Infiltration") ou par voie liquide, comme cela est bien connu en soi. La densification par voie liquide consiste à imprégner la structure fibreuse par une composition liquide contenant un précurseur du matériau constitutif de la matrice, typiquement une résine, la transformation du précurseur étant réalisée par traitement thermique.

Il est connu d'utiliser des pièces en matériau composite formées à partir d'un empilement de plis pré-imprégnés. Pour former ce type de pièces, on peut tout d'abord empiler une pluralité de plis fibreux déjà pré-imprégnés puis faire polymériser la résine présente dans l'empilement ainsi obtenu par traitement thermique dans un autoclave. En variante, les plis fibreux peuvent être empilés à l'état sec puis la résine peut être injectée par procédé de moulage par transfert de résine (« Resin Transfer Molding », « RTM ») ou d'infusion. La résine ainsi injectée est ensuite polymérisée par traitement thermique. De telles structures stratifiées peuvent toutefois ne pas présenter des propriétés mécaniques optimales.

En effet, les structures stratifiées (0°,90°) peuvent ne pas entièrement transférer les charges transverses ou de cisaillement inter laminaire, en particulier à cause d'effets de bord, générant un amorçage précoce de délaminage et entrainant la ruine de la structure.

Afin de diminuer cette sensibilité au délaminage, il est possible d'utiliser des structures stratifiées dites quasi isotropes présentant des plis à 45° pour notamment diminuer les effets de bord et remonter le niveau d'amorçage.

Toutefois, l'intérêt des matériaux composites est de disposer les fibres dans le sens des efforts et d'y adapter la raideur dans ces mêmes directions. Les structures stratifiées quasi isotropes mentionnées précédemment ne permettent pas de maximiser le nombre de fibres dans une direction donnée et leurs propriétés mécaniques peuvent donc être améliorées. FR2970898 A1 décrit une ébauche fibreuse de carter formée par un seul et même pli fibreux en tissu 3D à armure interlock.

Il existe donc un besoin pour disposer de nouvelles pièces en matériau composite présentant des propriétés mécaniques améliorées.

### Objet et résumé de l'invention

A cet effet, l'invention propose, selon un premier aspect, une pièce en matériau composite comportant au moins :
- une préforme fibreuse formant un renfort fibreux comportant un empilement d'au moins deux plis fibreux non tissés entre eux, chacun des plis fibreux étant en tissu tridimensionnel à armure interlock et chacun des plis fibreux ayant un nombre de couches de fils de chaîne ou un nombre de couches de fils de trame supérieur ou égal à 3, et
- une matrice présente dans la porosité de la préforme fibreuse.

Par "tissu tridimensionnel" ou "tissu 3D", on entend ici un tissu dans lequel certains au moins des fils de chaîne lient des fils de trame sur plusieurs couches de trame. Par "armure interlock", on entend ici une armure de tissage 3D dont chaque couche de chaîne lie plusieurs couches de trames avec tous les fils de la même colonne de chaîne ayant le même mouvement dans le plan de l'armure. Pour les définitions du tissu tridimensionnel et du tissu interlock, une inversion des rôles entre chaîne et trame est possible, et doit être considérée comme couverte par les revendications.

Dans l'invention, l'empilement est réalisé par superposition d'une pluralité de plis fibreux et est, par conséquent, différent d'un empilement obtenu par enroulement d'un unique pli fibreux. Ainsi, les fils d'un premier pli fibreux de l'empilement ne s'étendent pas dans un deuxième pli fibreux de l'empilement différent du premier. En particulier, les plis de l'empilement ne sont pas tissés entre eux.

L'invention repose sur la mise en œuvre dans le renfort fibreux de la pièce d'un empilement de plis fibreux particulier permettant, d'une part, de contrôler les mécanismes de fissuration et d'éviter, d'autre part, le phénomène de délaminage lorsque la pièce est en service.

Le fait que les plis présentent chacun au moins trois couches de fils de chaîne ou de trame ainsi qu'un tissage 3D de type interlock permet de leur conférer un caractère dit endommageable. Dans un pli endommageable, les fissures apparaissant dans la matrice présentent une propagation limitée, la propagation de ces fissures étant entravée par les fibres avoisinantes.

Différents essais ont été réalisés par l'inventeur afin d'évaluer la résistance de différents types de renfort fibreux et les constatations suivantes ont été faites. Lorsque le renfort fibreux est formé par un empilement de plis en tissu bidimensionnel (hors invention), l'énergie nécessaire pour qu'une fissure se propage dans la pièce est, relativement faible, de l'ordre de 500 à 600 J/m². La propagation des fissures dans de telles structures peut être relativement aisée et conduit un délaminage précoce de la structure stratifiée. Un autre essai a été réalisé dans lequel le renfort fibreux était formé par un unique pli en tissu tridimensionnel (hors invention). Cet essai a permis de résoudre le problème du délaminage et d'augmenter l'énergie nécessaire pour qu'une fissure se propage à des valeurs de l'ordre de 4000 J/m². Dans ce cas, la propagation des fissures se traduit par un endommagement du pli. Dans l'invention, on empile au moins deux plis fibreux chacun en tissu tridimensionnel à armure interlock. Dans l'invention, des valeurs particulièrement élevées pour l'énergie de propagation des fissures sont obtenues, de plus de 6000 J/m². L'invention permet donc d'obtenir un renfort fibreux non délaminable, limitant au plus la propagation des fissures et conférant ainsi au matériau des propriétés mécaniques améliorées. Il a donc été constaté de manière inattendue que l'empilement de plis fibreux tridimensionnels mis en œuvre dans l'invention permet d'améliorer significativement la résistance mécanique de la pièce par rapport à la mise en œuvre d'un renfort fibreux tridimensionnel en une seule pièce.

Les pièces selon l'invention présentent ainsi des propriétés mécaniques significativement améliorées tout en présentant une masse équivalente, voire même plus faible, par rapport à celles de l'art antérieur. Le fait d'empiler plusieurs plis fibreux afin de former la préforme fibreuse est, en outre, avantageux pour former des pièces de grandes dimensions lesquelles peuvent être difficilement réalisables par tissage tridimensionnel d'un bloc fibreux monolithique.

Dans un exemple de réalisation, la préforme fibreuse peut comporter au moins trois plis fibreux.

Dans un exemple de réalisation, au moins un des plis fibreux empilés peut comporter des fils ayant des titres différents. Par exemple, chacun des plis fibreux empilés peut comporter des fils ayant des titres différents.

La variation du titre des fils présents dans les plis fibreux empilés peut par exemple permettre d'obtenir une surépaisseur locale dans une ou plusieurs zones de la préforme fibreuse.

Dans un exemple de réalisation, le nombre de plis fibreux empilés peut être constant sur toute la zone couverte par l'empilement.

Dans un exemple de réalisation, le nombre de plis fibreux empilés peut varier sur la zone couverte par l'empilement.

La variation du nombre de plis fibreux empilés peut par exemple permettre d'obtenir une surépaisseur locale dans une ou plusieurs zones de la préforme fibreuse.

Dans un exemple de réalisation, la pièce peut constituer un carter de moteur aéronautique.

La présente invention vise également un procédé de fabrication d'une pièce telle que définie plus haut, comportant l'étape suivante :
- formation d'une matrice dans la porosité d'une préforme fibreuse comportant un empilement d'au moins deux plis fibreux non tissés entre eux, chacun des plis fibreux étant en tissu tridimensionnel à armure interlock et chacun des plis fibreux ayant un nombre de couches de fils de chaîne ou un nombre de couches de fils de trame supérieur ou égal à 3.

La matrice peut, par exemple, être formée par injection d'une résine dans la porosité de la préforme fibreuse.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 représente de manière très schématique et partielle un premier exemple de préforme fibreuse utile pour constituer le renfort fibreux d'une pièce selon l'invention,
- la figure 2 illustre un plan d'armure de tissage tridimensionnel interlock,
- la figure 3 est un ordinogramme illustrant différentes étapes d'un procédé de fabrication d'une pièce en matériau composite selon l'invention, et
- la figure 4 représente de manière très schématique et partielle un deuxième exemple de préforme fibreuse utile pour constituer le renfort fibreux d'une pièce selon l'invention.

### Description détaillée de modes de réalisation

Le domaine d'application de l'invention concerne notamment des pièces en matériau composite présentant une matrice de type résine, dans le cas de matériaux composites utilisés à température relativement peu élevée, typiquement jusqu'à 300°C, ou en matériau réfractaire tel que carbone ou un matériau céramique dans le cas de composites thermostructuraux.

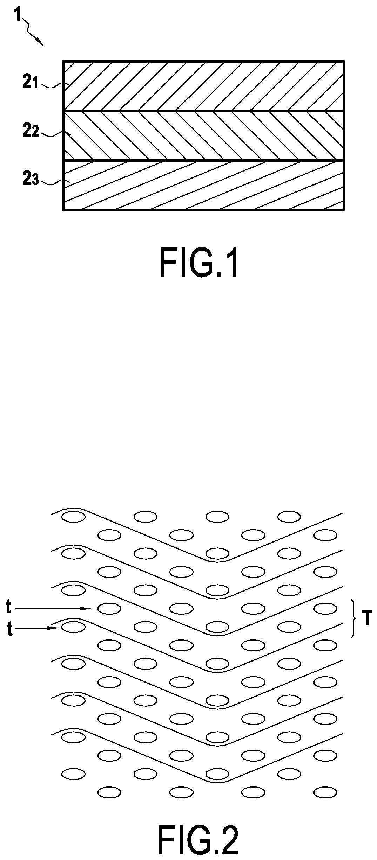

La figure 1 montre un empilement 1 de trois plis fibreux 2₁, 2₂ et 2₃ distincts formant une préforme fibreuse utile pour constituer le renfort fibreux d'un exemple de pièce selon l'invention. Chacun des plis fibreux 2₁, 2₂ et 2₃ étant en tissu tridimensionnel à armure interlock et chacun des plis fibreux 2₁, 2₂ et 2₃ ayant un nombre de couches de fils de chaîne ou un nombre de couches de fils de trame supérieur ou égal à 3. Il est possible qu'au moins un des plis fibreux 2₁, 2₂ et 2₃, voire que chacun d'entre eux, présente à la fois un nombre de couches de fils de chaîne supérieur ou égal à 3 et un nombre de couches de fils de trame supérieur ou égal à 3. Avantageusement, les fibres de chacun des plis fibreux 2₁, 2₂ et 2₃ peuvent s'étendre sensiblement dans la même direction. Un pli fibreux unidirectionnel peut ou non être présent entre deux plis fibreux 2₁, 2₂ et 2₃ adjacents. Les plis fibreux 2₁, 2₂ et 2₃ ne sont pas tissés entre eux. Les plis fibreux 2₁, 2₂ et 2₃ ne sont pas tissés entre eux sur toute la largeur et sur toute la longueur de la préforme fibreuse. La préforme fibreuse est ainsi dépourvue d'une zone dans laquelle une couche de fils d'un premier pli est tissée avec une couche de fils d'un deuxième pli distinct du premier pli. En particulier dans toute la préforme fibreuse, aucune couche de fils de chaîne du premier pli n'est tissée avec une couche de fils de chaîne du deuxième pli. Dans toute la préforme fibreuse, aucune couche de fils de trame du premier pli n'est tissée avec une couche de fils de trame du deuxième pli.

Comme mentionné plus haut, l'empilement 1 est, comme illustré, réalisé par superposition d'une pluralité de plis fibreux 2₁, 2₂ et 2₃ et est, par conséquent, différent d'un empilement obtenu par enroulement d'un unique pli fibreux.

Chacun des plis fibreux empilés 2₁, 2₂ et 2₃ est en tissu interlock. On a représenté à la figure 2 une vue d'un plan d'une armure interlock à 7 couches de chaîne et 8 couches de trame utilisable pour former les plis fibreux empilés 2₁, 2₂ et 2₃. Dans l'armure interlock illustrée, une couche de trame T est formée de deux demi-couches de trame t adjacentes décalées l'une par rapport à l'autre dans le sens chaîne. On a donc 16 demi-couches de trame positionnées en quinconce. Chaque chaîne lie 3 demi-couches de trame. On pourrait aussi adopter une disposition en trame non en quinconce, les fils de trame de deux couches de trame voisines étant alignés sur des mêmes colonnes. Des armures de tissage de type interlock utilisables sont décrites dans le document WO 2006/136755.

Les fibres formant les plis fibreux empilés peuvent, par exemple, être en matériau céramique, par exemple en carbure de silicium, en carbone ou en un oxyde, par exemple en alumine. Les fibres formant les plis fibreux empilés 2₁, 2₂ et 2₃ peuvent être de même nature chimique. En variante, les plis fibreux empilés 2₁, 2₂ et 2₃ peuvent comporter des fibres de nature chimique différente. Dans l'exemple illustré, le nombre de plis fibreux empilés est constant sur toute la zone couverte par l'empilement, ici égal à trois.

L'exemple illustré montre un empilement 1 comprenant trois plis fibreux empilés 2₁, 2₂ et 2₃. Bien entendu, on ne sort pas du cadre de l'invention lorsque l'empilement comporte deux plis fibreux ou plus de trois plis fibreux empilés.

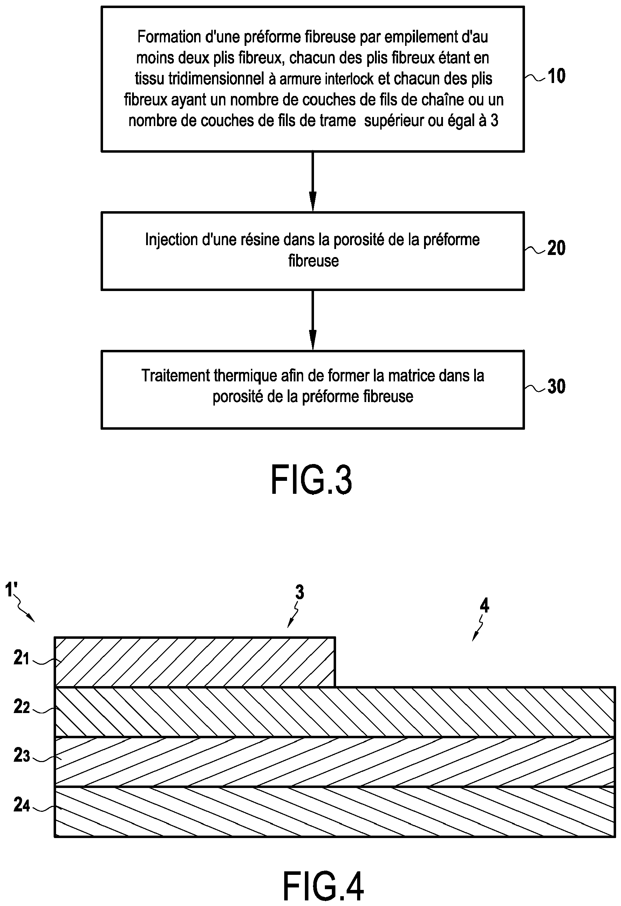

La figure 3 est un ordinogramme d'un exemple de procédé de fabrication d'une pièce selon l'invention. Dans une première étape 10, au moins deux plis fibreux sont empilés, chacun de ces plis fibreux étant en tissu tridimensionnel à armure interlock et chacun de ces plis fibreux ayant un nombre de couches de fils de chaîne ou un nombre de couches de fils de trame supérieur ou égal à 3. Les plis empilés ne sont pas tissés entre eux. Les plis peuvent durant l'étape 10 être empilés à l'état sec et être placés dans un moule afin de former la préforme fibreuse. Dans ce cas, une résine est injectée dans la porosité de la préforme fibreuse lors de l'étape 20, cette résine étant ensuite polymérisée lors de l'étape 30 par soumission à un traitement thermique afin de former la matrice dans la porosité de la préforme fibreuse. En variante, on peut empiler des plis fibreux déjà pré-imprégnés et procéder au traitement thermique afin d'obtenir une pièce selon l'invention.

On a représenté à la figure 4 un deuxième exemple d'empilement 1' de plis fibreux empilés 2₁, 2₂, 2₃ et 2₄ formant une préforme fibreuse utile pour constituer le renfort fibreux d'une pièce selon l'invention. L'exemple d'empilement l'illustré à la figure 4 présente dans une première région 3 de l'empilement un nombre différent de plis fibreux empilés (quatre plis fibreux) que dans une deuxième région 4 de l'empilement où seulement trois plis fibreux sont présents. Ces variations du nombre de plis fibreux dans l'empilement 1' peuvent, comme illustré, permettre l'obtention d'une surépaisseur locale.

L'expression « compris(e) entre ... et ... » ou « allant de ... à ... » doit se comprendre comme incluant les bornes.

## Revendications

1. Pièce en matériau composite comportant au moins:
- une préforme fibreuse formant un renfort fibreux comportant un empilement d'au moins deux plis fibreux non tissés entre eux, chacun des plis fibreux étant en tissu tridimensionnel à armure interlock et chacun des plis fibreux ayant un nombre de couches de fils de chaîne ou un nombre de couches de fils de trame supérieur ou égal à 3, et
- une matrice présente dans la porosité de la préforme fibreuse.

2. Pièce selon la revendication 1, **caractérisée en ce qu'**au moins un des plis fibreux empilés comporte des fils ayant des titres différents.

3. Pièce selon l'une quelconque des revendications 1 et 2, **caractérisée en ce que** le nombre de plis fibreux empilés est constant sur toute la zone couverte par l'empilement.

4. Pièce selon l'une quelconque des revendications 1 et 2, **caractérisée en ce que** le nombre de plis fibreux empilés varie sur la zone couverte par l'empilement.

5. Pièce selon l'une quelconque des revendications 1 à 4, **caractérisée en ce que** la pièce constitue un carter de moteur aéronautique.

6. Procédé de fabrication d'une pièce selon l'une quelconque des revendications 1 à 5, comportant l'étape suivante :
- formation d'une matrice dans la porosité d'une préforme fibreuse comportant un empilement d'au moins deux plis fibreux non tissés entre eux, chacun des plis fibreux étant en tissu tridimensionnel à armure interlock et chacun des plis fibreux ayant un nombre de couches de fils de chaîne ou un nombre de couches de fils de trame supérieur ou égal à 3.

## Patentansprüche

1. Teil aus Verbundwerkstoff, wenigstens umfassend:
- einen Faservorformling, der eine Faserverstärkung bildet, die einen Stapel aus wenigstens zwei nicht untereinander verwobenen Faserlagen umfasst, wobei eine jede der Faserlagen aus dreidimensionalem Gewebe mit Interlock-Bindung besteht und wobei eine jede der Faserlagen eine Anzahl von Kettfadenschichten oder eine Anzahl von Schussfadenschichten größer als oder gleich 3 aufweist, und
- eine Matrix, die in der Porosität des Faservorformlings vorhanden ist.

2. Teil nach Anspruch 1, **dadurch gekennzeichnet, dass** wenigstens eine der gestapelten Faserlagen Fäden mit unterschiedlichen Feinheiten umfasst.

3. Teil nach einem der Ansprüche 1 und 2, **dadurch gekennzeichnet, dass** die Anzahl der gestapelten Faserlagen über den gesamten vom Stapel bedeckten Bereich konstant ist.

4. Teil nach einem der Ansprüche 1 und 2, **dadurch gekennzeichnet, dass** die Anzahl der gestapelten Faserlagen über den vom Stapel bedeckten Bereich variiert.

5. Teil nach einem der Ansprüche 1 bis 4, **dadurch gekennzeichnet, dass** das Teil ein Flugtriebwerkgehäuse bildet.

6. Verfahren zur Herstellung eines Teils nach einem der Ansprüche 1 bis 5, umfassend den folgenden Schritt:
- Ausbilden einer Matrix in der Porosität eines Faservorformlings mit einem Stapel aus wenigstens zwei nicht untereinander verwobenen Faserlagen, wobei eine jede der Faserlagen aus dreidimensionalem Gewebe mit Interlock-Bindung besteht und wobei eine jede der Faserlagen eine Anzahl von Kettfadenschichten oder eine Anzahl von Schussfadenschichten größer als oder gleich 3 aufweist.

## Claims

1. A composite material part comprising at least:
- a fiber preform forming fiber reinforcement comprising a stack of at least two fiber plies that are not woven together, each of the fiber plies being made of an interlock weave three-dimensional fabric and each of the fiber plies having a number of warp yarn layers or a number of weft yarn layers that is greater than or equal to three; and
- a matrix present in the pores of the fiber preform.

2. A part according to claim 1, **characterized in that** at least one of the stacked fiber plies includes yarns having different weights.

3. A part according to claim 1 or claim 2, **characterized in that** the number of stacked fiber plies is constant over the entire zone covered by the stack.

4. A part according to claim 1 or claim 2, **characterized in that** the number of stacked fiber plies varies over the zone covered by the stack.

5. A part according to any one of claims 1 to 4, **characterized in that** the part constitutes an aeroengine casing.

6. A method of fabricating a part according to any one of claims 1 to 5, the method including the following steps:
- forming a matrix in the pores of a fiber preform comprising a stack of at least two fiber plies that are not woven together, each of the fiber plies being made of an interlock weave three-dimensional fabric and each of the fiber plies having a number of warp yarn layers or a number of weft yarn layers that is greater than or equal to three.
